# FASCICULE DE BREVET EUROPEEN

(11) **EP 2 432 981 B1**
(45) Date de publication et mention de la délivrance du brevet: **28.09.2016**
(21) Numéro de dépôt: 10723689.5
(22) Date de dépôt: 16.04.2010
(51) Int. Cl.: F02K 1/48, F02K 1/38

(54) **CAPOT POUR TUYÈRE DE TURBOMACHINE, TUYÈRE ET TURBOMACHINE ASSOCIÉES**
GONDEL FÜR DIE DÜSE EINER TURBOMASCHINE, ZUGEHÖRIGE DÜSE UND TURBOMASCHINE
COWLING FOR A TURBOMACHINE NOZZLE, CORRESPONDING NOZZLE AND TURBOMACHINE

(30) Priorité: 20.05.2009 FR 0953355
(43) Date de publication de la demande: 28.03.2012
(73) Titulaire: Snecma, 75015 Paris (FR)
(72) Inventeur: QUARIN, Benedetta, I-00040 Pomezia (RM) (IT); ZEGGAI, Kamel, F-93140 Bondy (FR)
(74) Mandataire: Boura, Olivier
(86) Numéro de dépôt international: PCT/FR2010/050736
(87) Numéro de publication internationale: WO 2010/133780

(56) Documents cités:
- EP-A1- 1 482 160
- EP-A1- 1 617 068
- EP-A1- 1 873 388
- EP-A1- 1 873 389
- EP-A1- 2 042 721
- EP-A2- 0 984 152
- DE-A1-102004 004 076
- FR-A1- 2 902 468
- FR-A1- 2 920 036
- GB-A- 2 082 259
- GB-A- 2 146 702
- US-B2- 6 532 729

## Description

### Arrière-plan de l'invention

La présente invention se rapporte au domaine général de la réduction de bruit de jet en sortie d'une tuyère de turbomachine. Elle vise plus particulièrement un capot pour tuyère de turbomachine de type à flux séparés qui est muni de motifs pour réduire le bruit de jet.

La pollution sonore est devenue aujourd'hui l'un des sujets de préoccupation pour les motoristes qui sont de plus en plus confrontés à la nuisance acoustique de leurs turbomachines. Les sources de bruit d'une turbomachine sont nombreuses mais il a été constaté que le bruit de jet en sortie de tuyère est le bruit prédominant lors de la phase de décollage d'un avion. Les autorités de certification étant de plus en plus exigeantes face aux émissions acoustiques des turbomachines, des efforts ont été demandés aux motoristes pour réduire le bruit de leurs turbomachines, et notamment le bruit de jet en sortie de tuyère.

Typiquement, une tuyère à flux séparés de turbomachine se compose d'un capot primaire centré sur l'axe longitudinal de la turbomachine, d'un capot secondaire disposé concentriquement autour du capot primaire de façon à définir un premier canal annulaire pour l'écoulement d'un flux externe (ou flux froid), et d'un corps central disposé concentriquement à l'intérieur du capot primaire de façon à définir un second canal annulaire pour l'écoulement d'un flux interne (ou flux chaud), le capot primaire s'étendant au-delà du capot secondaire.

Dans une telle tuyère, le bruit de jet provient des mélanges entre les flux froid et chaud et entre le flux froid et l'air externe contournant la tuyère. Ce bruit est un bruit à large bande de fréquence généré par deux types de source acoustique : un bruit à haute fréquence provenant de petites structures turbulentes du mélange entre les flux et perçu essentiellement près de la tuyère ; et un bruit à basse fréquence provenant des grosses structures tourbillonnaires apparaissant loin du jet.

Pour réduire le bruit de jet, l'un des moyens utilisés est d'augmenter efficacement le mélange entre ces flux. A cet effet, il est connu de munir au moins l'un des capots de la tuyère d'une pluralité de motifs répétitifs répartis sur toute la circonférence du bord de fuite du capot. Par la mise en place de tels motifs sur le bord de fuite du capot de la tuyère, le mélange entre les flux s'effectue par la création de tourbillons (ou vortex) près de la tuyère pour mieux dissiper l'énergie cinétique, et par conséquent réduire l'intensité turbulente des gros tourbillons constituant les sources de bruit majeures.

Par exemple, le brevet US 6,532,729 prévoit de munir le bord de fuite des capots primaire et secondaire de la tuyère d'une pluralité de motifs répétitifs de forme triangulaire (appelés chevrons) qui permettent de favoriser le mélange entre les flux s'écoulant de part et d'autre des motifs.

De tels motifs permettent de favoriser le mélange entre les flux en diminuant notamment la composante à basse fréquence du bruit de jet. Cette diminution qui nécessite d'être accrue est toutefois obtenue au prix d'une pénalité sur les performances de la turbomachine car le rendement de la tuyère est dégradé.

### Objet et résumé de l'invention

La présente invention a donc pour but principal de pallier de tels inconvénients en proposant une forme géométrique particulière de motifs à réduction de bruit de jet permettant de réduire davantage le bruit de jet tout en limitant leur impact sur les performances aérodynamiques de la tuyère.

Ce but est atteint grâce à un capot annulaire pour tuyère de turbomachine, comportant une pluralité de motifs disposés dans le prolongement d'un bord de fuite du capot et espacés circonférentiellement les uns des autres, chaque motif ayant un contour de forme sensiblement polygonale avec une base formée par une partie du bord de fuite du capot et au moins un sommet espacé vers l'aval de la base et raccordé à celle-ci par des bords latéraux, et dans lequel, conformément à l'invention, chaque motif comporte, au niveau de chacun de ses bords latéraux, au moins une ailette, chaque ailette étant inclinée radialement par rapport au motif suivant un plan incliné d'un angle compris entre 0° et 45° par rapport à une direction radiale.

La présence d'ailettes au niveau des bords latéraux des motifs polygonaux à réduction de bruit permet d'augmenter la capacité de ces motifs à générer des tourbillons qui sont des sources de mélange entre les flux s'écoulant de part et d'autre du capot. En effet, ces ailettes qui sont inclinées radialement par rapport aux motifs triangulaires créent une marche qui génère un enroulement de l'écoulement des flux et qui favorise ainsi le mélange entre les flux.

Selon une disposition avantageuse, chaque ailette possède une extrémité amont de raccordement au bord latéral du motif qui est espacée de la base du motif d'une distance correspondant à au moins 15% de la distance séparant la base du sommet du motif et une extrémité aval de raccordement au bord latéral du motif qui est espacée du sommet du motif d'une distance correspondant à au moins 15% de la distance séparant la base du sommet du motif. Cette disposition particulière des ailettes (par rapport à la base et au sommet des motifs triangulaires) permet de créer une ouverture pour l'écoulement des flux à la sortie des motifs, ce qui limite la traînée de ces ailettes et donc les performances aérodynamiques de la tuyère.

Selon une autre disposition avantageuse, l'extrémité de chaque ailette qui est la plus éloignée du bord latéral correspondant du motif est espacée de celui-ci d'une distance correspondant à au moins 30% de la distance séparant la base du sommet du motif.

Chaque motif polygonal peut présenter un contour de forme sensiblement triangulaire. De même, chaque ailette peut présenter un contour de forme sensiblement triangulaire avec une base formée par une partie du bord latéral du motif et un sommet espacé de la base et raccordée à celle-ci par des bords latéraux. Dans ce cas, les bords latéraux de chaque ailette présentent avantageusement un profil courbe et le sommet de celle-ci est arrondi.

De même, les bords latéraux de chaque motif présentent avantageusement un profil courbe et le sommet de celui-ci est arrondi.

Selon un mode de réalisation, chaque motif comporte, au niveau de chacun de ses bords latéraux, deux ailettes, l'une de ces ailettes étant inclinée radialement vers l'intérieur par rapport au motif et l'autre ailette étant inclinée radialement vers l'extérieur par rapport au motif.

L'invention a également pour objet une tuyère de turbomachine dont le capot primaire et/ou le capot secondaire est un capot tel que défini précédemment.

L'invention a encore pour objet une turbomachine comportant au moins un capot tel que défini précédemment.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique en perspective d'une tuyère de turbomachine équipée d'un capot selon un mode de réalisation de l'invention ;
- la figure 2 est une vue agrandie d'un motif à réduction de bruit de jet du capot de la figure 1 ;
- les figures 3 et 4 sont des vues de côté et de face, respectivement, du motif de la figure 2 ; et
- les figures 5 et 6 sont des vues de profil et de côté, respectivement, d'un motif à réduction de bruit d'un capot selon un autre mode de réalisation de l'invention.

### Description détaillée de modes de réalisation

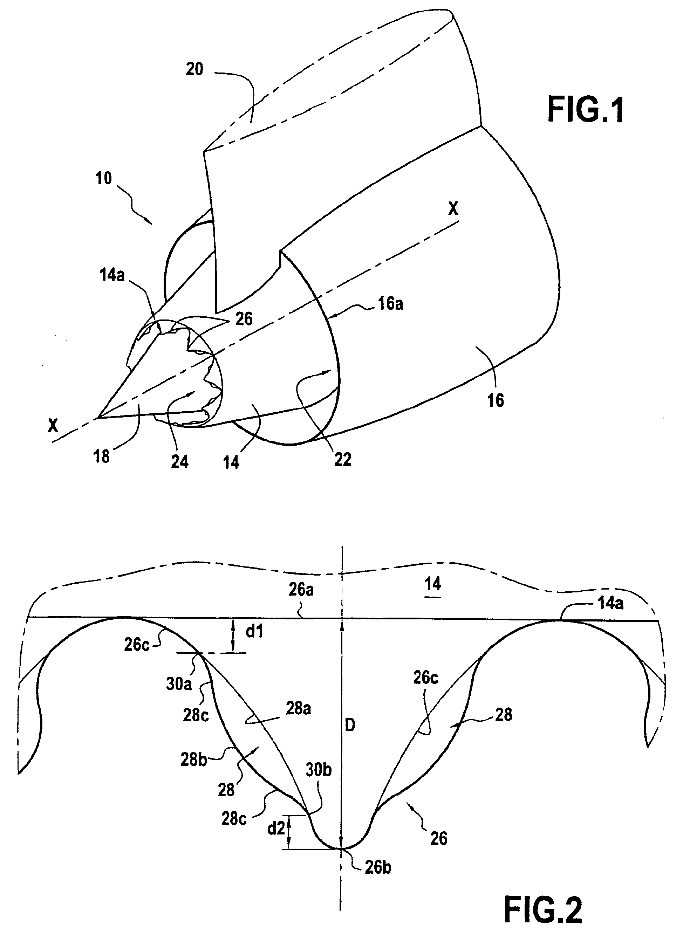

La figure 1 représente, de façon très schématique et en perspective, une tuyère 10 à flux séparés de turbomachine.

La tuyère 10, de forme axisymétrique par rapport à son axe longitudinal X-X, est typiquement formée d'un capot primaire 14, d'un capot secondaire 16 et d'un corps central 18 qui sont centrés sur l'axe longitudinal X-X de la tuyère.

Le capot primaire 14, de forme sensiblement cylindrique ou tronconique, s'étend selon l'axe longitudinal X-X de la tuyère. Le corps central 18 est disposé concentriquement à l'intérieur du capot primaire 14 et se termine par une partie sensiblement conique.

Le capot secondaire 16, également de forme sensiblement cylindrique ou tronconique, entoure le capot primaire 14 tout en lui étant concentrique et s'étend également selon l'axe longitudinal X-X de la tuyère. Le capot primaire 14 s'étend longitudinalement vers l'aval au-delà du capot secondaire 16.

On notera que, sur l'exemple de réalisation de la figure 1, le corps central 18 de la tuyère 10 est de type externe, c'est à dire que le corps central 18 s'étend longitudinalement au-delà du bord de fuite 14a du capot primaire 14.

Toutefois, l'invention peut également s'appliquer à une tuyère à flux séparés de type interne dans laquelle le bord de fuite du capot primaire s'étend longitudinalement au-delà du corps central de façon à recouvrir complètement ce dernier. De même, l'invention peut aussi s'appliquer à une tuyère dite à flux mélangés dans laquelle le bord de fuite du capot secondaire s'étend longitudinalement au-delà de celui du capot primaire.

La tuyère à flux séparés ainsi définie est fixée sous une aile d'avion (non représentée sur les figures) par l'intermédiaire d'un pylône de support 20 s'appuyant sur le capot secondaire 16 de la tuyère et se prolongeant à l'intérieur du capot secondaire jusqu'au capot primaire 14.

L'assemblage concentrique des éléments de la tuyère 10 permet de définir, d'une part entre les capots primaire 14 et secondaire 16, un premier canal annulaire 22 pour l'écoulement de l'air issu de la turbomachine et appelé flux secondaire ou flux froid, et d'autre part, entre le capot primaire 14 et le corps central 18, un second canal annulaire 24 pour l'écoulement d'un flux gazeux interne issu de la turbomachine et appelé aussi flux primaire ou flux chaud.

Les flux primaire et secondaire s'écoulant dans ces deux canaux annulaires 22, 24 se mélangent entre eux au niveau d'un bord de fuite 14a du capot primaire 14. De même, le flux secondaire se mélange à un flux d'air externe contournant la tuyère au niveau d'un bord de fuite 16a du capot secondaire 16.

Au moins l'un des deux capots 14, 16 de la tuyère 10 comporte une pluralité de motifs 26 répétitifs qui sont destinés à réduire le bruit de jet en sortie de la tuyère.

Sur l'exemple de réalisation de la figure 1, les motifs 26 à réduction de bruit de jet sont disposés sur le capot primaire 14. Cependant, ils pourraient tout aussi bien être disposés seulement sur le capot secondaire 16 ou bien à la fois sur le capot primaire et le capot secondaire de la tuyère.

Les motifs 26 à réduction de bruit de jet sont disposés dans le prolongement du bord de fuite 14a du capot primaire 14 et sont régulièrement espacés les uns des autres dans le sens circonférentiel. Ils peuvent être répartis sur toute ou partie seulement de la circonférence du capot primaire.

Chaque motif présente en outre un contour de forme générale sensiblement polygonale avec une base formée par une partie du bord de fuite 14a du capot 14, et au moins un sommet espacé vers l'aval de la base et raccordé à celle-ci par deux bords latéraux.

Ainsi, dans l'exemple de réalisation des figures 1 à 6, chaque motif 26 présente un contour de forme générale triangulaire avec une base 26a et un sommet 26b espacé vers l'aval de la base 26a et raccordé à celle-ci par deux bords latéraux 26c.

Bien entendu, d'autres formes de polygones peuvent être envisagées pour le contour des motifs 26. Ceux-ci pourraient ainsi présenter un contour de forme trapézoïdale avec une base et deux sommets raccordés chacun à la base par un bord latéral.

Comme représenté plus en détails sur la figure 2, les bords latéraux 26c de chaque motif 26 présentent avantageusement un profil courbe et le sommet 26b de celui-ci est de préférence arrondi.

Selon l'invention, chaque motif 26 à réduction de bruit comporte, au niveau de chacun de ses bords latéraux 26c, au moins une ailette 28 qui est inclinée radialement par rapport au motif.

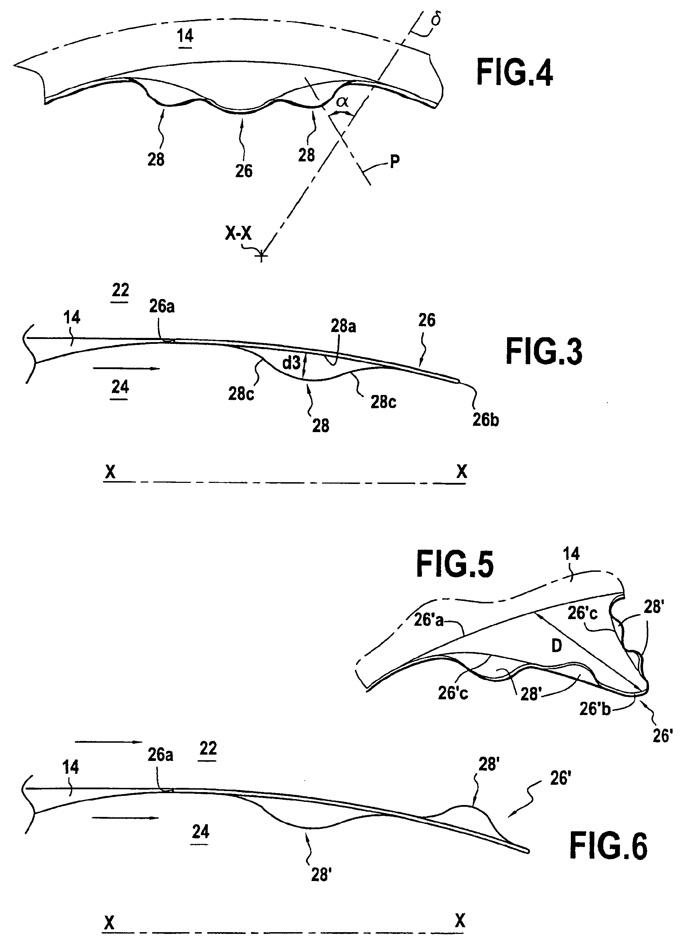

Comme représenté sur la figure 3, les motifs 26 à réduction de bruit sont disposés dans le prolongement axial du capot primaire 14, tandis que les ailettes 28 sont inclinées radialement vers l'intérieur du capot primaire, c'est-à-dire qu'elles pénètrent dans le second canal 24 d'écoulement du flux chaud. Bien entendu, les ailettes pourraient aussi bien être inclinées radialement vers l'extérieur du capot primaire, c'est-à-dire pénétrer dans le premier canal 22 d'écoulement du flux froid.

Ainsi, comme représenté sur la figure 4, les ailettes 28 des motifs à réduction de bruit sont contenues chacune dans un plan P qui est incliné de préférence d'un angle α compris entre 0° et 45° par rapport à une direction radiale δ. Ainsi, les ailettes 28 se raccordent aux bords latéraux des motifs selon des arêtes (ou angles saillants).

Les ailettes 28 des motifs 26 à réduction de bruit présentent un certain nombre de caractéristiques géométriques. En particulier, de façon avantageuse, chaque ailette présente une extrémité amont 30a de raccordement au bord latéral 26c correspondant du motif qui est espacée de la base 26a du motif d'une distance d1 correspondant à au moins 15% de la distance D séparant la base 26a du sommet 26b du motif, et une extrémité aval 30b de raccordement au bord latéral du motif qui est espacée du sommet du motif d'une distance d2 correspondant à au moins 15% de la distance D séparant la base du sommet du motif.

En d'autres termes, le profil géométrique des bords latéraux 26c des motifs à réduction de bruit reste inchangé, d'une part dans une zone partant de la base 26a des motifs et s'étendant axialement vers l'aval sur une distance correspondant à au moins 15% de la distance D, et d'autre part dans une zone partant du sommet 26b des motifs et s'étendant axialement vers l'amont sur une distance correspondant à au moins 15% de cette même distance D. Ainsi, la présence des ailettes 28 sur les bords latéraux des motifs à réduction de bruit n'accroît pas sensiblement leur traînée et limite donc l'effet sur les performances aérodynamiques de la tuyère.

De préférence, chaque ailette 28 présente elle-même un contour de forme sensiblement triangulaire avec une base 28a formée par une partie du bord latéral 26c du motif et un sommet 28b espacé de la base et raccordée à celle-ci par des bords latéraux 28c. Dans ce cas, comme pour le profil des motifs 26 à réduction de bruit, les bords latéraux 28c des ailettes présentent avantageusement un profil courbe et le sommet 28b de celles-ci est de préférence arrondi. Bien entendu, d'autres formes géométriques sont envisageables pour les ailettes. Ainsi, celles-ci pourraient alternativement présenter une forme de créneaux par exemple (c'est-à-dire être rectangulaires).

Selon une autre caractéristique avantageuse de l'invention, l'extrémité de chaque ailette 28 qui est la plus éloignée du bord latéral 26c correspondant du motif 26 (à savoir le sommet 28b de l'ailette lorsque celle-ci a une forme triangulaire) est espacée de celui-ci d'une distance d3 correspondant à au moins 30% de la distance D séparant la base 26a du sommet 26b du motif.

En liaison avec les figures 5 et 6, on décrira maintenant un autre mode de réalisation d'un motif à réduction de bruit 26' pour un capot d'une tuyère de turbomachine.

Ce motif 26' à réduction de bruit diffère de celui décrit précédemment en ce qu'il comporte, au niveau de chacun de ses bords latéraux 26'c, deux ailettes 28' qui sont inclinées radialement par rapport au motif.

Plus précisément, l'une de ces ailettes 28' est inclinée radialement vers l'intérieur du capot 14 (c'est-à-dire qu'elle pénètre dans le second canal 24 d'écoulement du flux chaud), tandis que l'autre ailette est inclinée radialement vers l'extérieur de ce même capot (c'est-à-dire qu'elle pénètre dans le premier canal 22 d'écoulement du flux froid).

Par ailleurs, comme pour l'autre mode de réalisation précédemment décrit, ces ailettes 28' sont disposées de sorte à ce que le profil géométrique des bords latéraux 26'c des motifs à réduction de bruit reste inchangé, d'une part dans une zone partant de la base 26'a des motifs et s'étendant axialement vers l'aval sur une distance correspondant à au moins 15% de la distance D, et d'autre part dans une zone partant du sommet 26'b des motifs et s'étendant axialement vers l'amont sur une distance correspondant à au moins 15% de la distance D.

Enfin, les avantages des motifs à réduction de bruit qui ont été décrits en liaison avec l'autre mode de réalisation s'appliquent également aux motifs décrits ici.

## Revendications

1. Capot annulaire (14, 16) pour tuyère (10) de turbomachine, comportant une pluralité de motifs (26, 26') disposés dans le prolongement d'un bord de fuite (14a, 16a) dudit capot et espacés circonférentiellement les uns des autres, chaque motif ayant un contour de forme sensiblement triangulaire avec une base (26a, 26'a) formée par une partie du bord de fuite du capot et un sommet (26b, 26'b) qui est le point du contour le plus espacé vers l'aval de la base et qui est raccordé à celle-ci par deux bords latéraux (26c, 26'c), **caractérisé en ce que** chaque motif comporte, au niveau de chacun de ses bords latéraux, au moins une ailette (28, 28'), chaque ailette étant inclinée radialement par rapport au motif suivant un plan (P) incliné d'un angle compris entre 0° et 45° par rapport à une direction radiale (δ).

2. Capot selon la revendication 1, dans lequel chaque ailette possède une extrémité amont (30a) de raccordement au bord latéral du motif qui est espacée de la base du motif d'une distance (d1) correspondant à au moins 15% de la distance (D) séparant la base du sommet du motif et une extrémité aval (30b) de raccordement au bord latéral du motif qui est espacée du sommet du motif d'une distance (d2) correspondant à au moins 15% de la distance (D) séparant la base du sommet du motif.

3. Capot selon l'une des revendications 1 et 2, dans lequel l'extrémité (28b) de chaque ailette (28, 28') qui est la plus éloignée du bord latéral (26c, 26'c) correspondant du motif (26, 26') est espacée de celui-ci d'une distance (d3) correspondant à au moins 30% de la distance (D) séparant la base du sommet du motif.

4. Capot selon l'une quelconque des revendications 1 à 3, dans lequel chaque ailette (28, 28') présente un contour de forme sensiblement triangulaire avec une base (28a) formée par une partie du bord latéral (26c, 26'c) du motif (26, 26') et un sommet (28b) espacé de la base et raccordée à celle-ci par des bords latéraux (28c).

5. Capot selon la revendication 4, dans lequel les bords latéraux (28c) de chaque ailette (28, 28') présentent un profil courbe et le sommet (28b) de celle-ci est arrondi.

6. Capot selon l'une quelconque des revendications 1 à 5, dans lequel les bords latéraux (26c, 26'c) de chaque motif (26, 26') présentent un profil courbe et le sommet (26b, 26'b) de celui-ci est arrondi.

7. Capot selon l'une quelconque des revendications 1 à 6, dans lequel chaque motif (26') comporte, au niveau de chacun de ses bords latéraux (26'c), deux ailettes (28'), l'une de ces ailettes étant inclinée radialement vers l'intérieur par rapport au motif et l'autre ailette étant inclinée radialement vers l'extérieur par rapport au motif.

8. Tuyère (10) de turbomachine, comportant un capot primaire (14) disposé selon un axe longitudinal (X-X) de la tuyère et un capot secondaire (16) disposé concentriquement autour du capot primaire (14), **caractérisée en ce que** le capot primaire (14) et/ou le capot secondaire (16) est un capot selon l'une quelconque des revendications 1 à 7.

9. Turbomachine comportant une tuyère (10) ayant au moins un capot (14, 16) selon l'une quelconque des revendications 1 à 7.

## Patentansprüche

1. Ringförmige Verkleidung (14, 16) für eine Düse (10) einer Turbomaschine, umfassend eine Vielzahl von Mustern (26, 26'), die in der Verlängerung einer Austrittskante (14a, 16a) der Verkleidung angeordnet und in Umfangsrichtung voneinander beabstandet sind, wobei ein jedes Muster eine Kontur mit im Wesentlichen dreieckiger Form mit einer Grundseite (26a, 26'a), welche durch einen Teil der Austrittskante der Verkleidung gebildet ist, und einer Spitze (26b, 26'b), welche die in stromabwärtiger Richtung von der Grundseite am weitesten beabstandete Stelle der Kontur ist und welche an diese über zwei Seitenkanten (26c, 26'c) angeschlossen ist, aufweist, **dadurch gekennzeichnet, dass** jedes Muster im Bereich einer jeden seiner Seitenkanten wenigstens einen Flügel (28, 28') umfasst, wobei jeder Flügel gegenüber dem Muster in einer um einen Winkel zwischen 0°und 45°gegenüber einer radialen Richtung (δ) geneigten Ebene (P) radial geneigt ist.

2. Verkleidung nach Anspruch 1, bei der jeder Flügel ein stromaufwärtiges Ende (30a) zum Anschließen an die Seitenkante des Musters besitzt, das von der Grundseite des Musters um einen Abstand (d1), welcher wenigstens 15 % des Abstandes (D) zwischen der Grundseite und der Spitze des Musters entspricht, beabstandet ist, sowie ein stromabwärtiges Ende (30b) zum Anschließen an die Seitenkante des Musters, das von der Spitze des Musters um einen Abstand (d2), welcher wenigstens 15 % des Abstandes (D) zwischen der Grundseite und der Spitze des Musters entspricht, beabstandet ist.

3. Verkleidung nach einem der Ansprüche 1 und 2, bei der das Ende (28b) eines jeden Flügels (28, 28'), das von der entsprechenden Seitenkante (26c, 26'c) des Musters (26, 26') am weitesten entfernt ist, von dieser um einen Abstand (d3), welcher wenigstens 30 % des Abstandes (D) zwischen der Grundseite und der Spitze des Musters entspricht, beabstandet ist.

4. Verkleidung nach einem der Ansprüche 1 bis 3, bei der jeder Flügel (28, 28') eine Kontur mit im Wesentlichen dreieckiger Form mit einer Grundseite (28a), welche durch einen Teil der Seitenkante (26c, 26'c) des Musters (26, 26') gebildet ist, und einer Spitze (28b), welche von der Grundseite beabstandet und an diese über Seitenkanten (28c) angeschlossen ist, aufweist.

5. Verkleidung nach Anspruch 4, bei der die Seitenkanten (28c) eines jeden Flügels (28, 28') ein gekrümmtes Profil aufweisen und die Spitze (28b) dessen abgerundet ist.

6. Verkleidung nach einem der Ansprüche 1 bis 5, bei der die Seitenkanten (26c, 26'c) eines jeden Musters (26, 26') ein gekrümmtes Profil aufweisen und die Spitze (26b, 26'b) dessen abgerundet ist.

7. Verkleidung nach einem der Ansprüche 1 bis 6, bei der jedes Muster (26') im Bereich einer jeden seiner Seitenkanten (26'c) zwei Flügel (28') aufweist, wobei der eine dieser Flügel gegenüber dem Muster radial einwärts geneigt ist und der andere Flügel gegenüber dem Muster radial auswärts geneigt ist.

8. Düse (10) einer Turbomaschine, umfassend eine Primärverkleidung (14), die entlang einer Längsachse (X-X) der Düse angeordnet ist, und eine Sekundärverkleidung (16), die um die Primärverkleidung (14) herum konzentrisch angeordnet ist, **dadurch gekennzeichnet, dass** die Primärverkleidung (14) und/oder die Sekundärverkleidung (16) eine Verkleidung nach einem der Ansprüche 1 bis 7 ist.

9. Turbomaschine, die eine Düse (10) mit wenigstens einer Verkleidung (14, 16) nach einem der Ansprüche 1 bis 7 umfasst.

## Claims

1. An annular hood (14, 16) for a turbomachine nozzle (10), the hood including a plurality of patterns (26, 26') arranged to extend a trailing edge (14a, 16a) of said hood and circumferentially spaced apart from one another, each pattern having an outline of substantially triangular shape with a base (26a, 26'a) formed by a portion of the trailing edge of the hood and a vertex (26b, 26'b) that is the point of the outline that is spaced downstream furthest away from the base and that is connected thereto by two lateral edges (26c, 26'c), the hood being **characterized in that** each pattern includes, in each of its side edges, at least one fin (28, 28'), each fin being inclined radially relative to the pattern in a plane (P) that is inclined at an angle lying in the range 0° to 45° relative to a radial direction (δ).

2. A hood according to claim 1, wherein each fin possesses an upstream end (30a) connected to the lateral edge of the pattern that is spaced apart from the base of the pattern by a distance (d1) corresponding to at least 15% of the distance (D) between the base and the vertex of the pattern, and a downstream end (30b) connecting to the lateral edge of the pattern that is spaced apart from the vertex of the pattern by a distance (d2) corresponding to at least 15% of the distance (D) between the base and the vertex of the pattern.

3. A hood according to claim 1 or claim 2, wherein the end (28b) of each fin (28, 28') that is furthest from the corresponding side edge (26c, 26'c) of the pattern (26, 26') is spaced apart therefrom by a distance (d3) corresponding to at least 30% of the distance (D) between the base and the vertex of the pattern.

4. A hood according to any one of claims 1 to 3, wherein each fin (28, 28') presents an outline of substantially triangular shape with a base (28a) formed by a portion of the lateral edge (26c, 26'c) of the pattern (26, 26'), and a vertex (28b) that is spaced apart from the base and that is connected thereto by lateral edges (28c).

5. A hood according to claim 4, wherein the lateral edges (28c) of each fin (28, 28') present a profile that is curved with the vertex (28b) thereof being rounded.

6. A hood according to any one of claims 1 to 5, wherein the lateral edges (26c, 26'c) of each pattern (26, 26') present a curved profile and the vertex (26b, 26'b) thereof is rounded.

7. A hood according to any one of claims 1 to 6, wherein each pattern (26') includes, in each of its lateral edges (26'c), two fins (28'), one of the fins being inclined radially inwards relative to the pattern and the other fin being inclined radially outwards relative to the pattern.

8. A turbomachine nozzle (10) having a primary hood (14) arranged along a longitudinal axis (X-X) of the nozzle, and a secondary hood (16) arranged concentrically around the primary hood (14), the nozzle being **characterized in that** the primary hood (14) and/or the secondary hood (16) is a hood according to any one of claims 1 to 7.

9. A turbomachine including a nozzle (10) having at least one hood (14, 16) according to any one of claims 1 to 7.
